# EUROPÄISCHE PATENTSCHRIFT

(11) **EP 1 473 142 B1**
(45) Veröffentlichungstag und Bekanntmachung des Hinweises auf die Patenterteilung: **24.05.2006**
(21) Anmeldenummer: 04009488.0
(22) Anmeldetag: 22.04.2004
(51) Int. Cl.: B29C 65/52, B64C 3/26, B64F 5/00

(54) **Verfahren zum Ausgleichen eines Fügespaltes**
Method for filling a joining gap
Procédé pour compenser le jeu entre deux pièces lors de leur assemblage

(30) Priorität: 02.05.2003 DE 10319926
(43) Veröffentlichungstag der Anmeldung: 03.11.2004
(73) Patentinhaber: Airbus Deutschland GmbH, 21129 Hamburg (DE)
(72) Erfinder: Weisser, Tilmann, Dipl.-Ing., 21680 Stade (DE)
(74) Vertreter: Hansmann, Dierk

(56) Entgegenhaltungen:
- EP-A- 1 004 361
- DE-A- 4 136 653
- US-A- 4 980 005
- US-A- 5 385 050
- US-A1- 2002 078 545

## Beschreibung

Die Erfindung betrifft ein Verfahren zum Ausgleichen eines Fügespaltes gemäß dem Oberbegriff des Anspruchs 1.

Im Flugzeugbau werden oftmals Kunststoffe eingesetzt, die mit Kohlefasern verstärkt sind. Dabei werden, beispielsweise bei der Herstellung von Passagierflugzeugen vom Typ: "Airbus" (sehr) häufig dünne Stringer und dünne Hautfelder, die aus diesem Werkstoff bestehen, verwendet, die durch Fügen in bestimmter Art und Weise miteinander verbunden sind. Diese faserverstärkten Kunststoffbauteile werden beispielsweise als versteifungsprofile zur Integralverstärkung von kunststoffartigen Beplankungsfelder benötigt, wobei das Fügen der Stringer auf einem Hautfeld durch eine Kleb- oder Nietverbindung der Fügepartner umgesetzt wird. Zum Ausgleichen eines vorhandenen Fügespaltes, den die Auflageflächen der Fügepartner meistens einschließen, wird eine (sogenannte) Shimm-Masse verwendet, mit welcher der Fügespalt vor der Durchführung des Fügens aufgefüllt wird. Die Verarbeitung von Shimm-Masse ist sehr kostenintensiv, zeitraubend und in ihrer Anwendung auf ein maximales Spaltmaß begrenzt. Dieses Spaltmaß kann durch eine Einzelteilfertigung nicht immer erreicht werden. Sofern beispielsweise ein Kleben der Fügepartner bevorzugt wird, erfolgt diese Klebverbindung durch das Auftragen eines geeigneten Klebers auf die vorgesehenen Klebeflächen beider Fügepartner, wobei die Stringer-Auflage danach auf der mit Shimm-Masse ausgeglichenen Hautfeldfläche, positioniert wird und darauffolgend der Stringer an letztere gedrückt wird. Die zu verbindenden Fügepartner bleiben an der Fügestelle im festen Zustand und sind unlösbar und stoffschlüssig verbunden.

Als Alternative zum Spaltmaßausgleich mit der Shimm-Masse wird temporär auf eine mechanische Bearbeitung der Einzelteile zurückgegriffen. Diese Technologie erfordert ebenfalls einen hohen Aufwand, weil die Fertigung ebenflächiger Bauteile, die an den Auflageflächen der Teile (nahezu) kein Spalt einschließen, mit hoher Sorgfalt und Präzision ausgeführt werden muss, daher sehr kostenintensiv und zeitraubend sein wird.

Das Fügen von dicken - und damit starren - CFK-Stringern auf ein dickwandiges, starres CFK-Hautfeld wurde, soweit bekannt, bisher nicht durchgeführt. Derwegen fehlt es einem Fachmann weitestgehend am nötigen Hintergrundwissen (Know How) und an Erfahrungen unter Praxisbedingungen, die nicht vorhanden sein können, welche(s) er bei einer gewünschten Umsetzung jener Technologie einbringen könnte. Es ist aber denkbar, dass sich das (eingangs) vorgestellte Verfahren keinesfalls bedenkenlos auf das Fügen derartiger Fügepartner übertragen lassen wird. Zumindestens ist der Fachwelt soweit bekannt, dass sich frühere Fügeverfahren nicht für dickwandige Bauteile eignen werden, da sich große Spaltmaße, die aus Einzelteiltoleranzen entstehen, bei dickwandigen Bauteilen nicht während des Fügeprozesses durch einfaches Andrücken minimieren lassen. Auch die Lösungen der Druckschriften: "US-A 4,980,005", "EP 0 089 954 B1", "DE 197 38 885 A1" und "US-A 5,963,660" werden der Fachwelt wohl kaum als Vorbild dienen können, um jenen angegebenen Nachteilen erfolgreich zu begegnen.

Demzufolge liegt der Erfindung die Aufgabe zugrunde, ein verfahren zum Ausgleichen eines Fügespaltes bereitzustellen, den die Auflageflächen von aufeinander positionierten dick(wandig)en Fügepartnern einschließen werden, mit dem sich weitestgehend sehr große Spaltmaße ausgleichen lassen, wodurch die Voraussetzungen für eine qualitätsgerechte Umsetzung von einer unlösbaren, stoffschlüssigen Verbindung der zu fügenden Partner geschaffen werden. Die vorgeschlagenen Maßnahmen sollen im vergleich mit bekannten Füge-Technologien kostenmindernd und zeiteinsparend wirken und ein nachfolgendes rationelles Fügen der Bauteile beeinflussen.

Diese Aufgabe wird durch die im Anspruch 1 angegebenen Maßnahmen gelöst. In den weiteren Ansprüchen sind zweckmäßige Ausgestaltungen und Weiterbildungen dieser Maßnahmen angegeben.

Die Erfindung wird in einem Ausführungsbeispiel anhand der beigefügten zeichnungen näher erläutert. Es zeigen:
- Fig. 1: eine Anordnung mit einer Scannereinheit zum Scannen einer Schalenfläche;
- Fig. 2: eine Anordnung mit einer Scannereinheit zum Scannen der Gurtoberfläche eines Stringers und eine Darstellung weiterer Einheiten zur Umsetzung des Verfahrens, die der Scannereinheit verbunden sind;
- Fig. 3: die Anordnung der aufliegenden Fügepartner mit Darstellung eines ersten auszugleichenden Fügespaltes;
- Fig. 3a: die Anordnung der aufliegenden Fügepartner mit Darstellung eines zweiten und dritten auszugleichenden Fügespaltes;
- Fig. 4: die Anordnung von beabstandeten Fügepartnern mit einer Darstellung von deren nach innen gewölbten Auflagefläche;
- Fig. 4a: die Anordnung von beabstandeten Fügepartnern mit einer Darstellung von deren erhobenen (nach außen gewölbten) Auflagefläche;
- Fig. 5: die Darstellung einer Schalenfläche mit deren nach innen gewölbten und mit einem Füllgut ausgeglichenen Vertiefung inmitten eines ausgewählten Oberflächenbereiches der Schalenfläche;
- Fig. 6: die Darstellung des ausgewählten Oberflächenbereiches nach Fig. 5 mit einem dem Oberflächenbereich beabstandet angeordneten Stringer;
- Fig. 7: die Anordnung nach Fig. 3 mit Darstellung des mit dem Füllgut ausgeglichenen Fügespaltes.

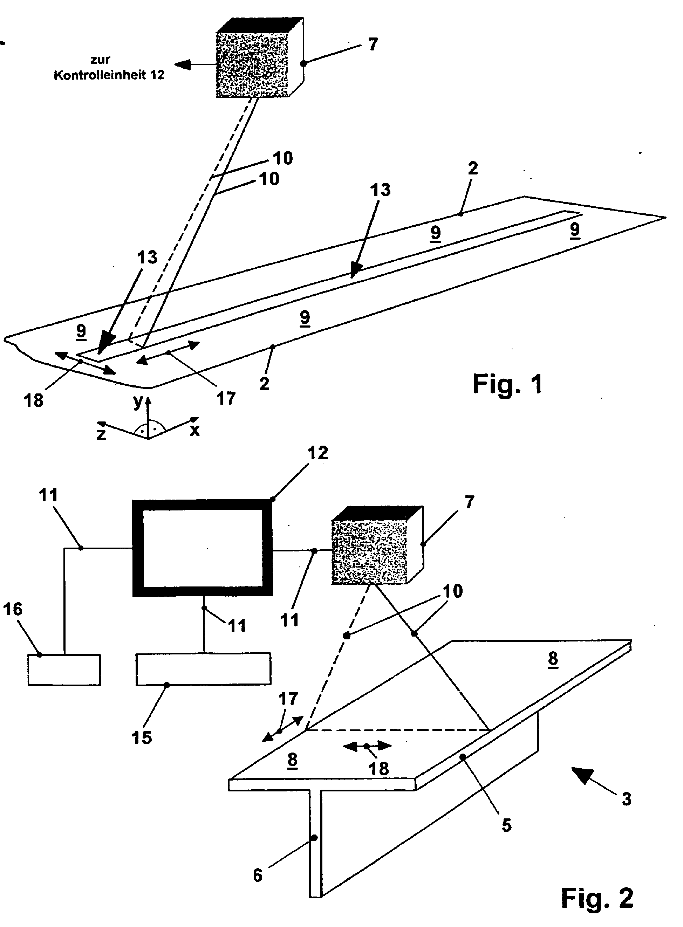

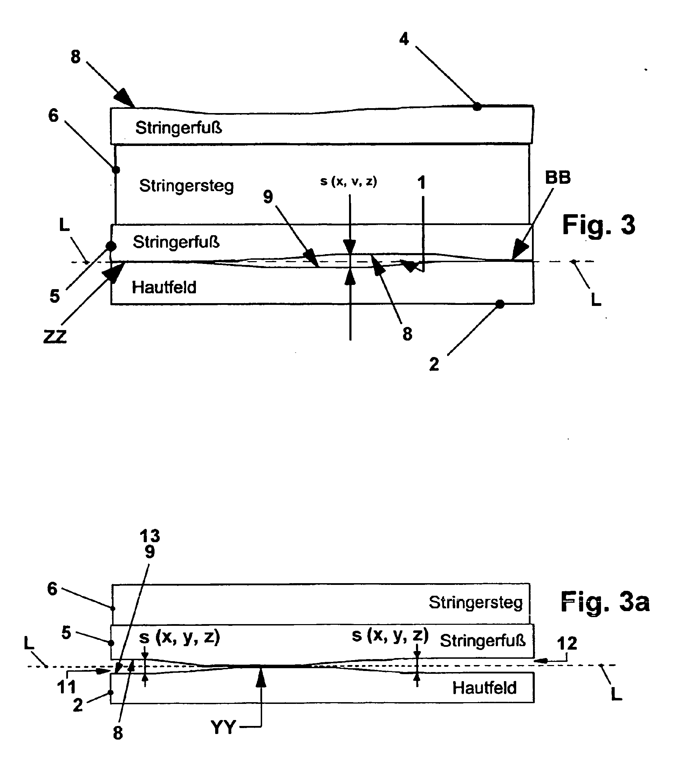

Das Verfahren zum Ausgleichen eines Fügespaltes 1, den zwei aufeinander liegende Flächen von einer Schale 2 und einem Stringer 3 einschließen, wird nachfolgend anhand der angegebenen Figuren 1 bis 7 beschrieben. Dabei bezieht sich die Schale 2 beispielsweise auf ein Hautfeld (vgl. die Figuren 3, 3a, 4, 4a und 7), das (im Flugzeugbau mit) ein Bestandteil der Struktur (bspw. eines Flugzeuges) ist. Sofern der Schale 2 respektive dem Hautfeld an einer vordefinierten Stelle bzw. innerhalb einem vordefinierten Bereich der Haut ein Stringer 3 durch Fügen mechanisch verbunden ist, wird eine versteifung der Struktur mit dem erhaltenen Produkt (Halbzeug) möglich, deshalb sich letzteres als versteifungsprofil zur Integralverstärkung der Struktur verwenden läßt. Das angegebene Verfahren wird mit dick(wandig)en Fügepartnern realisiert, wobei (nach diesem Beispiel) vorgesehen wird, dass dicke, (und damit) starre (bspw. CFK-) Stringer 3 auf einem dickwandigen, (und damit) starren (bspw. CFK-) Hautfeld durch Fügen verbunden werden. Diese berücksichtigten Fügepartner können durchaus auch aus einem Leichtmetall, beispielsweise aus Aluminium oder einer Aluminiumlegierung, bestehen. Dabei werden sowohl T-als auch H-förmige Stringer berücksichtigt.

Ohne auf diesen Fügeprozeß näher eingehen zu wollen, könnten beispielsweise diese beiden Fügepartner im Bereich ihrer Auflage unter Ausübung von Druck und unter Beaufschlagung mit einer Temperatur miteinander eine feste und (an der Fügestelle) mechanisch unlösbare Verbindung eingehen; wobei eine Schichtung von zusätzlichen stofflichen Beigaben, die zwischen den Auflageflächen beider Fügepartnern angeordnet wird, welche die Fügung begünstigend beeinflussen könnte, bei diesem Verfahren nicht ausgeschlossen wird.

Anderenfalls wäre eine stoffschlüssige, unlösbare Verbindung der beiden Fügepartner durch ein thermisches Verschweißen der Randbereiche randseitlich der Auflageflächen auch denkbar. Da der eigentliche Fügeprozeß nicht den Hauptteil des vorzustellenden Verfahrens betrifft, wird auf weitere Ausführungen verzichtet.

Allerdings werden die zu verbindenden dickwandigen Stringer 3 auf einer dickwandigen Schale 2 (einem dickwandigen Hautfeld) im Rahmen der Vorbereitung auf die beabsichtigte Fügung beider Partner derweise technologische Probleme bereiten, wonach die unterschiedliche Geometrie der beiden Auflageflächen immer einen mehr oder weniger großen Fügespalt 1 unterschiedlichen spaltigen Abstands s einschließen werden. Diese Geometrie, die (in der Praxis) von einer plan gestalteten Ebene der einzelnen Auflagefläche des betreffenden Fügepartners abweichen wird, würde sich (gemäß den eingangs gegebenen Erläuterungen) nur durch eine gesonderte (i. d. R. mechanische) Vorbehandlung der Werkstückoberfläche des Fügepartners, beispielsweise durch ein Abtragen des Materials, abstellen lassen, wodurch ein weiterer Aufwand (mit wachsenden technologischen Einzelkosten) verursacht wird, was wiederum nicht gewünscht wird. Jedenfalls werden sich die nicht (oder kaum) zu verhindernden großen Spaltmaße zwischen den einander aufliegenden Flächen zweier dickwandiger Fügepartner, die oftmals auch durch Fertigungstoleranzen dieser aus einem (bspw.) kunststoff- oder metallartigen Werkstoff bestehenden Fügepartner verursacht werden, welche sich gewissermaßen durch eine Bereitstellung der vorgefertigten Stringer 3 und Schalen 2 mit einer (gewöhnlich) nach innen oder (auch) nach außen gekrümmten (gewölbten) Auflagefläche bemerkbar machen werden, während des Fügeprozesses nicht durch ein Andrücken, und das ohne großen Kraftaufwand, ausgleichen oder wenigstens minimieren lassen. Diese Ausführungen werden wegen einem beabsichtigten besseren Verständnis der nachfolgend vorgestellten Verfahrensschritte vorangestellt.

Nunmehr wird das Verfahren zum Ausgleichen eines (vorhandenen) Fügespaltes 1 näher vorgestellt. Letzteres bezieht sich auf die Auflageflächen von einer Schale 2 und einem Stringer 3, wobei die Auflageflächen beider Objekte (Schale 2, Stringer 3), sofern diese aufeinander gelegen angeordnet sind, (wie vorgeschildert) i. d. R. eben diesen Fügespalt 1 einschließen. Die Darstellungen der Figuren 3, 3a, 4, 4a und 7 vermitteln einen entsprechenden Eindruck von der für das Verfahren interessierenden Anordnung und insbesondere von der Lage der verfahrensrelevanten Objekte.

Da dem Stringer 3 ein oberer und ein unterer Gurt 4, 5 integriert ist, welche horizontal angeordnet werden und zusammen mit einem zu ihnen senkrecht stehenden Steg 6 den Stringer 3 [einen Holm oder einen Träger] bilden, kann sowohl eine als Gurtauflagefläche 8 (allg.) bezeichnete Auflagefläche des oberen Gurtes 4 oder des unteren Gurtes 5 einem (allg. bezeichneten) ausgewählten Oberflächenbereich 13 der Schalenfläche 9 der Schale 2 (des betrachteten Hautfeldes) flächenkonform aufliegen, wobei die weiteren Betrachtungen von einer horizontalen Lage der beiden Auflageflächen ausgehen. Der obere und der untere Gurt 4, 5 werden in der Praxis auch als "Stringerfuß" und gleichermaßen der Steg 6 als "Stringersteg" bezeichnet (vgl. die Figuren 3, 3a, 4, 4a und 7). Mit der abschließenden Positionierung der betreffenden Gurtauflagefläche 8 auf dem ausgewählten Oberflächenbereich 13 wären die Voraussetzungen zum beabsichtigten Fügen dieser Auflageflächen abgeschlossen.

Da - wie erwähnt - das Beispiel sich auf eine dickwandige Schale 2 und einen dicken (größeren Querschnitt des) Gurt (es) 4 oder 5 bezieht, wird der flächeneingefasste Fügespalt 1 bei der (wie auch immer ausgeführten) Fügung beider Auflageflächen entsprechende Probleme bereiten, die es abzustellen gilt.

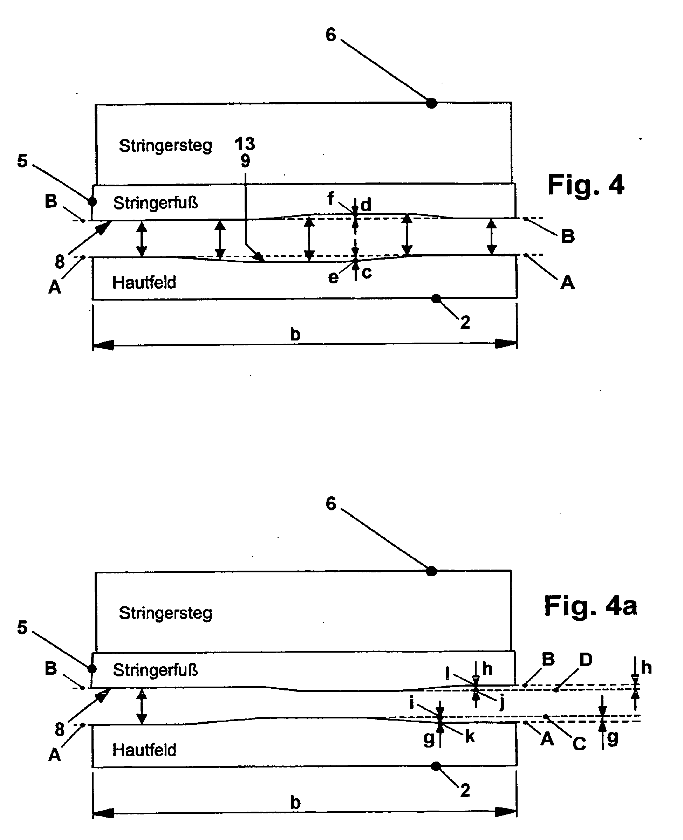

In den Figuren 1 und 2 werden nun die Auflageflächen einer Schale 2 und eines Stringers 3 gezeigt, die horizontal liegend angeordnet werden. In beiden Darstellungen wird außerdem eine Scannereinheit 7 dargestellt, mit der bestehende geometrische Abweichungen von einer Ebenmäßigkeit der Gurtauflagefläche 8 des (beispielgewählten) unteren Gurtes 5 (nach der Fig. 2) und der Schalenfläche 9 (nach der Fig. 1) durch horizontale oder vertikale und punkt- oder zeilenweise Abtastung der Gurtauflagefläche 8 oder der Schalenfläche 9 mit einem Laserstrahl 10 erfasst werden. Die Abtastung mit einem (allgemein bezeichneten) Lichtstrahl 10, bspw. mit einem Laserstrahl, wird in einer vertikalen Bewegungsrichtung 17 und in einer horizontalen Bewegungsrichtung 18 auf der Gurtauflage- und der Schalenfläche 8, 9 (für jede Auflagefläche einzeln) geschehen, wobei diese Bewegungsrichtungen 17, 18 mit den nachfolgenden eingeführten Koordinatenrichtungen x, z übereinstimmen werden. Die erfassten Abweichungen, welche die räumliche Lage eines (nach den Figuren 3 und 4 bspw.) vorhandenen und i. d. R. nach innen gewölbten TeiIbereiches der betrachteten Auflagefläche wiedergeben, die (bspw. nach den Figuren 3a und 4a) auch durch vorhandene erhobene Auflageflächen verdeutlicht einen nach außen gewölbten Teilbereich aufweisen kann, werden, - wie in der Fig. 2 dargestellt -, darauffolgend von einer (nicht gezeigten) Auswertelogik, die der Scannereinheit 7 integriert ist, elektronisch gewandelt, wobei das erfasste Scannerergebnis nach geschehener Wandlung ausgangs der Scannereinheit 7 bereitgestellt und in eine erste Signalleitung 11 eingespeist wird, über welche es an eine Kontrolleinheit 12 weitergeleitet wird.

Nach dem Verfahren wird zuerst der ausgewählte Oberflächenbereich 13 der Schalenfläche 9, auf dem die betreffende Gurtauflagefläche 8 später positioniert wird, vollständig mit dem von der Scannereinheit 7 ausgestrahlten Laserstrahl 10 nach der vorher angegebenen Art und weise abgetastet, sofern dessen Lage nach dem Vorbild der Fig. 1 gegeben ist.

Dabei wird die Scannereinheit 7 mit jedem ausgestrahlten Laserstrahl, der auf der Gurtauflagefläche 8 rastert, einen mit der geometrischen Abweichung korrelierenden Informationswert mit Hilfe einer (nicht gezeigten) Erfassungslogik, die ihr integriert ist, erfassen, wobei dieses erfasste Scannerergebnis von der erwähnten Auswertelogik aufgenommen wird, die eine Zusammenfassung dieser Informationswerte, welche das Ergebnis der geometrischen Abweichung reproduzieren werden, vornehmen wird. Dieses erfasste Scannerergebnis wird dann von der Auswertelogik nach geschehener elektronischer wandlung (gemäß dem Vorbild der Fig. 2) an die erwähnte Kontrolleinheit 12 zur Umsetzung nachgeordneter Verfahrensschritte übermittelt.

Gleichermaßen wird danach eine vollständige Abtastung der Oberfläche der Gurtauflagefläche 8 der Schale 3 (des Hautfeldes) mit dem von der Scannereinheit 7 ausgestrahlten Lichtstrahl, bspw. dem eingesetzten Laserstrahl, vorgenommen, wobei die Erfassung der geometrischen Abweichung, deren Auswertung und die elektronische Wandlung des ermittelten Scannerergebnisses sowie dessen Weiterleitung an die Kontrolleinheit 12 - wie vorher (am Beispiel der Abtastung des ausgewählten Oberflächenbereiches 13) erläutert - erfolgen wird. Dabei wird es uninteressant sein, welches der beiden Objekte (Schale 2 oder Stringer 3) in welcher Reihenfolge abgetastet wird. Das ermittelte Scannerergebnis ist (aus Gründen) von besonderem Interesse, da in einem darauffolgenden Schritt die (in der Fig. 2 dargestellte) Kontrolleinheit 12 den (nicht gewünschten) Fügespalt 1 für jeden abgetasteten spaltigen Abstand s zwischen dem ausgewählten Oberflächenbereich 13 (der Schalenfläche 9) und der Gurtauflagefläche 8 (des unteren Gurtes 5) rechentechnisch (durch Unterstützung einer Computersimulation) ermittelt wird. Der spaltige Abstand s, den die Flächenauflagen des unteren Gurtes 5 und des ausgewählten Oberflächenbereiches 13 einschließen, wird in den Figuren 3 und 3a dargestellt.

Sofern man (nach den Figuren 3, und 3a) die Lage eines betroffenen Fügeschlitzes 1, 11, 12 und gleichermaßen die [mit dem (beispielhaft eingesetzten) Laserstrahl abgetasteten] betreffenden Oberflächen des ausgewählten Oberflächenbereiches 13 bzw. der Gurtauflagefläche 8 sowie den sich verändernden spaltigen Abstand s eines ersten, zweiten und dritten Fügespaltes 1, 11, 12 auf kartesische Koordinatenrichtungen x, y, z, wie in der Fig. 1 angegeben, beziehen wird, wird hintergründig die vorerwähnte geometrische Abweichung der Auflageflächen beider Objekte und vordergründig die räumlich unterschiedliche Gestalt des flächeneingeschlossenen Fügeschlitzes 1 deutlich. Hinzukommend wird (auf alle Darstellungen der Figuren 1 bis 7 bezogen) erwähnt, dass der ausgewählte Oberflächenbereich 13 auf der Schale 2 (dem Hautfeld) und flächenkonform die Gurtauflagefläche 8 des unteren bzw. oberen Gurtes 5, 6 des Stringers 3 eine (etwa) rechteckförmige Auflagefläche eingrenzen, wobei die x-Koordinatenrichtung entlang der Rechtecklänge und die z-Koordinatenrichtung entlang der Rechteckbreite verlaufen wird.

Die y-Koordinatenrichtung bezieht sich auf den lotrechten Abstand von einem der Tiefpunkte e, f oder der Hochpunkte i, j der gewölbten (gekrümmten) Vertiefung oder Erhöhung der Oberfläche der Flächenauflage des ausgewählten Oberflächenbereiches 13 zum lotrecht gegenüberliegenden Tiefpunkt e, f oder Hochpunkt i, j der gewölbten (gekrümmten) Vertiefung oder Erhöhung der Oberfläche der Gurtauflagefläche 8, wobei dieser lotrechte Abstand mit dem (sich in den drei Koordinatenrichtungen x, y, z verändernden) vertikalen spaltigen Abstand s korrelieren wird.

Dabei wird die Kontrolleinheit 12 den (mit einem Blick auf die Figuren 3 und 3a erfassten) vertikalen spaltigen Abstand s zwischen oder neben(gelegen) den betreffenden Auflageflächen auf eine fiktiv (nur angenommene) definierte Abstandslinie L beziehen, die horizontal gelegen den ausgewählten Oberflächenbereich 13 der Schalenfläche 9 und die Gurtauflagefläche 8 des unteren Gurtes 5 überspannt.

Diese fiktive Abstandslinie L wird (nach dem Vorbild der Fig. 3) dem in y-Koordinatenrichtung vertikal (höchst) gelegenen (punktuellen oder flächenmäßigen) ersten und zweiten Berührungsbereich BB, ZZ, den der ausgewählte Oberflächenbereich 13 und die Gurtauflagefläche 8 (also: die Auflageflächen) beider aufeinander liegenden Objekte (Schale 2 und unterer Gurt 5 des Stringers 3) an der Stelle ihrer Berührung eingrenzen, tangential anliegen.

Alternativ lässt sich der vorgenannte Schritt möglicherweise auch mit der Kontrolleinheit 12, die (nach dem Vorbild der Fig. 2) informationstechnisch über eine weitere Signalleitung 11 mit einer Computereinheit 16 verbunden ist, dermaßen umsetzen, wonach (mit einem Blick auf die Fig. 4) mit letzterer im Rahmen einer Computersimulation zunächst ein erster vertikaler Abstand c ermittelt wird, der zwischen einer simulierten (technisch: nachgeahmten) zweiten Abstandslinie A und einem ersten Tiefpunkt e, der dieser zweiten Abstandslinie A lotrecht beabstandet gelegen ist und auf dem ausgewählten Oberflächenbereich 13 der Schalenfläche 9 liegt. Dabei wird der (lotrechte) vertikale Abstand c, der sich über die beiden Koordinatenrichtungen x, z in Richtung der y-Koordinatenrichtung verändern wird, der erwähnten flächenbezogenen geometrischen Abweichung des Oberflächenbereiches 13 der Schalenfläche 9 entsprechen, den die Kontrolleinheit 12 mit der ihr integrierten Erfassungslogik erfassen wird.

Danach wird gleichermaßen ein zweiter vertikaler Abstand d ermittelt werden, der zwischen einer simulierten (technisch: nachgeahmten) dritten Abstandslinie B und einem zweiten lotrecht der dritten Abstandslinie B beabstandet gelegenen Tiefpunkt f der flächenbezogenen geometrischen Abweichung der Gurtauflagefläche 8 liegt. Auch letzteren wird die Kontrolleinheit 12 mit der Erfassungslogik aufnehmen, wobei die Computereinheit 16 (ggf. auf Anfrage) die informativ erfassten vertikalen Abstände c, d der Kontrolleinheit digital bereitstellen und transferieren wird.

Diese beiden simulierten Abstandslinien A, B werden einer horizontal gelegenen Linie entsprechen, welche jeweils die Breite b (nach der Fig. 3) des ausgewählten Oberflächenbereiches 13 und der Gurtauflagefläche 8 überspannen werden und breitenseitlich des Fügespaltes 1 den Auflageflächen der Objekte tangential anliegen werden.

Darauffolgend wird die Auswertelogik der Kontrolleinheit 12 eine Addition der vertikalen Abstände c, d für jeden abgescannten Flächenbereich rechentechnisch vornehmen, wobei diese den (sich verändernden) spaltigen Abstand s durch eine Addition des vertikalen Abstandes c und des vertikalen Abstandes d für jede laserstrahlabgetastete Abweichung ermitteln wird.

Anderenfalls wird diese Kontrolleinheit 12 (nach dem Vorbild der Fig. 3a) eine fiktive Abstandslinie L berücksichtigen, die dem in y-Koordinatenrichtung vertikal gelegenen (punktuellen oder flächenmäßigen) dritten Berührungsbereich YY, den die erhobenen Auflageflächen (die Erhöhungen) des ausgewählten Oberflächenbereiches 13 der Schalenfläche 9 und die Gurtauflagefläche 8 (also: die Auflageflächen) beider aufeinander liegenden Objekte (Schale 2 und unterer Gurt 5 des Stringers 3) an der (den) Stelle (n) ihrer Berührung eingrenzen, tangential anliegen.

Alternativ diesem vorgenannten Schritt lässt sich möglicherweise mit der Kontrolleinheit 12, die (nach dem Vorbild der Fig. 2) informationstechnisch über die weitere Signalleitung 11 mit der Computereinheit 16 verbunden ist, auch dermaßen umsetzen, wonach (mit einem Blick auf die Fig. 4a) mit letzterer im Rahmen der erwähnten Computersimulation zunächst ein dritter vertikaler Abstand g ermittelt wird, der zwischen einem ersten Hochpunkt i der flächenbezogenen geometrischen Abweichung des Oberflächenbereiches 13 der Schalenfläche 9, der auf einer simulierten (technisch nachgeahmten) vierten Abstandslinie C liegt, und einem lotrecht der vierten Abstandslinie C beabstandet gelegenen ersten Ebenenpunkt k des Oberflächenbereiches 13 der Schalenfläche 9 liegt. Danach wird ein vierter vertikaler Abstand h ermittelt, der zwischen einem zweiten Hochpunkt j (der flächenbezogenen geometrischen Abweichung der Gurtauflagefläche 8), der auf einer simulierten fünften Abstandslinie D liegt, und einem lotrecht der fünften Abstandslinie D beabstandet gelegenen zweiten Ebenenpunkt 1 der Gurtauflagefläche 8 liegt. Dabei wird sowohl der (lotrechte) dritte als auch der vierte vertikale Abstand g, h, die sich (beide) über die beiden Koordinatenrichtungen x, z in Richtung der y-Koordinatenrichtung verändern werden, der erwähnten flächenbezogenen geometrischen Abweichung des Oberflächenbereiches 12 der Schalenfläche 9 und der Gurtauflagefläche 8 entsprechen, welche die Kontrolleinheit 12 mit der ihr integrierten Erfassungslogik getrennt erfassen wird. Auch den ersten und zweiten Hochpunkt i, j sowie den ersten und zweiten Ebenenpunkt k, l wird die Kontrolleinheit 12 mit der Erfassungslogik aufnehmen, wobei die Computeranlage 16 (ggf. auf Anfrage) die informativ erfassten vertikalen Abstände g, h der Kontrolleinheit 12 digital bereitstellen und transferieren wird.

Die beiden simulierten Abstandslinien C, D entsprechen einer simulierten (technisch nachgeahmten) horizontal gelegenen Linie, welche jeweils die Breite b des ausgewählten Oberflächenbereiches 13 und der Gurtauflagefläche 8 überspannen werden und den geometrisch von einer Ebenmäßigkeit abweichenden erhobenen Auflageflächen (den Erhöhungen) der Objekte, denen nebengelegen jeweils ein zweiter und dritter Fügespalt 11, 12 angrenzen wird, tangential anliegen werden. Darauffolgend wird die Addition dieser vertikalen Abstände g, h für jeden abgescannten Flächenbereich rechentechnisch ermittelt werden.

Ferner soll auch nicht unerwähnt bleiben, dass weitere alternative Möglichkeiten des Verfahrens, die nicht anhand einer Figur erläutert - sondern nur (hinweisend) angedeutet werden, auf in der Praxis auftretende Gegebenheiten abzielen, die sich auf weiter denkbare Krümmungen der Auflageflächen (von einer Gurtauflagefläche 8 und einem ausgewählten Oberflächenbereich 13 einer Schalenfläche 9) beziehen. Den Umständen entsprechend kann folgende Situation auftreten, dass beispielsweise der ausgewählte Oberflächenbereich 13 eine Vertiefung und die (zur Fügung vorgesehene) Gurtauflagefläche 4, 5 eine Erhöhung aufweisen werden, oder umgekehrt. Die nachfolgenden Ausführungen zur Bestimmung eines Fügespaltes werden sich mit einer dermaßen gegebenen Situation befassen.

In diesem Zusammenhang auch zurückkommend auf die vorher angegebenen alternativen Möglichkeiten der Ermittlung des spaltigen Abstandes s durch die Kontrolleinheit 12, wird denen hinzugefügt, dass mit letzterer im Rahmen der erwähnten Computersimulation die Umsetzung folgender Maßnahmen denkbar wäre.

Danach könnte zunächst mit der Kontrolleinheit 12, die (nach dem Vorbild der Fig. 2) informationstechnisch über die weitere Signalleitung 11 mit der Computereinheit 16 verbunden ist, durch letztere im Rahmen dieser Computersimulation (mit einem Blick auf die Fig. 4) entweder der erste oder der zweite vertikale Abstand c, d ermittelt werden. Es wird davon ausgegangen, dass bei dieser Ermittlung entweder der Oberflächenbereich 13 der Schalenfläche 9 oder die Gurtauflagefläche 8 des betreffenden Gurtes 4, 5 geometrisch nicht von einer Ebenmäßigkeit abweichen wird, also ein plan gestalteter Flächen(auflage)bereich von einem der beiden Objekte vorhanden sein wird. Dadurch wird die Ermittlung von einem dieser beiden Abstände c, d entfallen. Danach könnte durch die Computereinheit 16 im Rahmen der Computersimulation (mit einem Blick auf die Fig. 4a) entweder der dritte oder der vierte vertikale Abstand g, h ermittelt werden. Auch hier wird davon ausgegangen, dass bei dieser Ermittlung entweder der Oberflächenbereich 13 der Schalenfläche 9 oder die Gurtauflagefläche 8 des betreffenden Gurtes 4, 5 geometrisch nicht von einer Ebenmäßigkeit abweichen wird, also ein plan gestalteter Flächen(auflage)bereich von einem der beiden Objekte vorhanden sein wird. Dadurch wird die Ermittlung von einem dieser beiden Abstände g, h entfallen. Die beiden zuletzt genannten Maßnahmen werden sowohl in der angegebenen Reihenfolge als auch in einer umgekehrten Reihenfolge durchgeführt.

Nunmehr könnte die Frage auftauchen, warum - unter den angegebenen Voraussetzungen, dass jeweils ein Flächen(auflage)bereich von einem der beiden Objekte nicht von einer Ebenmäßigkeit abweichen wird, - die Bestimmung des ersten oder zweiten vertikalen Abstandes c, d und des dritten oder vierten vertikalen Abstandes g, h sinnvoll sein wird. Nun, in der Situation nach Fig. 4 wird eine Vertiefung des ausgewählten Oberflächenbereiches 13 der Schalenfläche 9 oder der betreffenden Gurtauflagefläche 4, 5 betrachtet, wogegen in der Situation nach Fig. 4a eine Erhöhung der Auflageflächen der beiden Objekte (Schale 2 und unterer oder oberer Gurt 4, 5) der Betrachtung zugrunde liegt. Da (zugegebenermaßen im Ausnahmefall) denkbar wäre, dass die (geometrisch von einer Ebenmäßigkeit abweichende) erhobene Auflagefläche (also: die Erhöhung) des ausgewählten Oberflächenbereiches 13 der Schalenfläche 2 oder der betreffenden Gurtauflagefläche 4, 5 sich innerhalb der nach innen gerichteten Krümmung bzw. Wölbung (also: der Vertiefung) der ihr aufliegenden Fläche (wie auch immer) versenken lässt, wird ein, wenn auch nur geringfügiger, zweiter und dritter Fügespalt 11, 12 neben(gelegen) der versenkten Bereiche, der entlang der Auflageflächen der Objekte verläuft, möglichenfalls vorhanden sein. Denkbar wäre auch, dass die Erhöhung nicht vollständig die Vertiefung ausfüllt, so dass zwischen diesen beiden Teilbereichen ebenfalls das Vorhandensein eines ersten Fügespaltes 1 denkbar wäre. Aber diese Vorstellungen geben wohl eher einen Ausnahmefall wieder, der aber nicht vergessen werden sollte.

Wahrscheinlicher wird eher die Situation sein, dass eine der beiden Auflageflächen eine erhobene Auflagefläche und die andere Auflagefläche des ihr aufliegenden Objektes eine geometrisch nicht von einer Ebenmäßigkeit abweichende, also einen vollkommen plan gestalteten Flächen(auflage)bereich aufweisen wird. In dieser Situation wären (nach dem Vorbild der Fig. 4a) der dritte oder der vierte vertikale Abstand g, h zu ermitteln, wogegen die Ermittlung des ersten oder zweiten vertikalen Abstandes c, d entfallen wird.

Es wird ein zweiter oder dritter Fügespalt 11, 12, der nebengelegen der Erhöhung der einen Auflagefläche, welche der nicht von einer Ebenmäßigkeit abweichenden anderen Auflagefläche aufliegen wird, vorhanden sein, der vor dem beabsichtigten Fügevorgang ausgeglichen werden sollte.

Nachdem nun im Rahmen vorangegangener Schritte des (bisher beschriebenen) Verfahrens angegeben wurde, auf welche weise mit Hilfe einer Computersimulation durch die Kontrolleinheit 12 die rechentechnische Ermittlung der betreffenden vertikalen Abstände c, d, g, h umgesetzt wird und damit die Ermittlung des betreffenden spaltigen Abstands s abgeschlossen wird, wird die Kontrolleinheit 12 auf der Basis der ihr bekannten (und ggf. in einer ihr integrierten Speichereinheit gespeicherten) Informationen danach mit der Auswertelogik die rechentechnische Bestimmung eines Füllgutes 14 vornehmen, das zum Ausgleichen des betreffenden Fügespaltes 1, 11, 12 (nach den Figuren 3, 3a) benötigt wird. Dieses Füllgut 14 wird hinsichtlich seiner Menge, Geometrie und seinem Volumen durch die Kontrolleinheit 12 rechentechnisch ermittelt, wobei (mit einem Blick auf die Fig. 2) das Ermittlungsergebnis über eine zusätzliche Signalleitung 11 an eine Füllmassen(dosier)einrichtung 15 übermittelt wird. Letztere ist mit einem Ultraschallcutter vergegenständlicht.

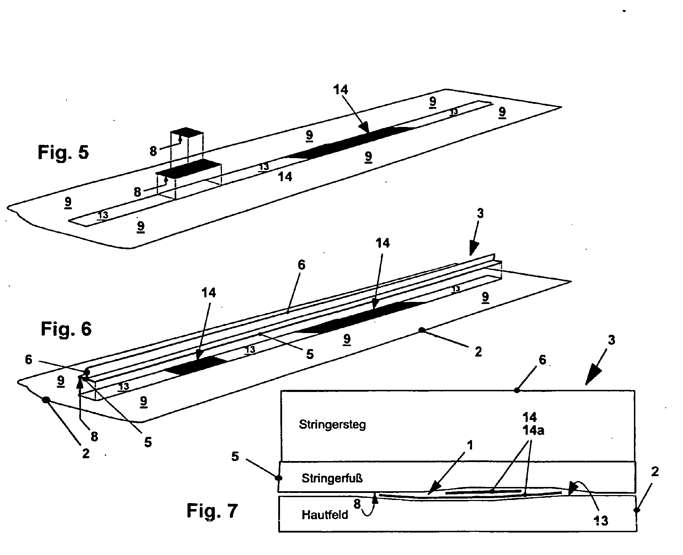

Darauffolgend wird (mit einem Blick auf die Fig. 6 und 7) das ermittelte Volumen des Füllgutes 14 in Korrelation von dessen Geometrie dem ausgewählten Oberflächenbereich 13 der Schalenfläche 9 aufgefüllt, sofern ein spaltiger Abstand s durch die Scannereinheit 12 abgetastet wurde. Dabei vermittelt die Fig. 5 dem Betrachter eine Ansicht, nach der das Füllgut 14 beispielsweise dem Füllschlitz 1 des ausgewählten Oberflächenbereiches 13, wie in der Fig. 7 deutlicher gezeigt, bereits aufgefüllt ist. In der Fig. 6 wird ein Stringer 3 gezeigt, der (in dieser Situation) dem ausgewählten Oberflächenbereich 13 der Schalenfläche 9 im Abstand angeordnet ist. Die Gurtauflagefläche 8 des unteren Gurtes 5 wird später flächenkonform dem ausgewählten Oberflächenbereich 13 der Schalenfläche 9 der Schale 2 (des Hautfeldes) liegend nach dem Vorbild der Fig. 7 auf dem Füllgut 14 abgelegt.

Einige zweckmäßige Ausgestaltungen und Weiterbildungen des vorgestellten Verfahrens zum Ausgleichen des betreffenden Fügespaltes 1, 11, 12 werden die vorgenannten Maßnahmen ergänzen. So wird vorher bereits erwähnt, dass mit dem Lichtstrahl 10 (Laserstrahl) ein rechteckförmiger Oberflächenbereich 13 auf der Schalenfläche 9 gescannt (abgetastet wird. Dem wird ergänzt, dass dabei die entsprechende Maßhaltigkeit (die Breiten- und Längenmaße) des Oberflächenbereiches 13 und diejenige der Gurtauflagefläche 8 aufeinander abgestimmt wird, die in ihrer bestimmten Endposition einander flächenkonform aufliegen werden.

Auch sollte die Erfassung der geometrischen Abweichungen von einer Ebenmäßigkeit der Schalenfläche 9 (respektive des ausgewählten Oberflächenbereiches 13) oder der Gurtauflagefläche 9 durch Abtastung der Auflageflächen der betreffenden Objekte mit einem Lichtstrahl 10, der als Laserstrahl von einer der Scannereinheit 7 integrierten (nicht gezeigten) Laserquelle bereitgestellt wird, erfolgen, mit dem die Gurtauflagefläche 8 und danach der ausgewählte Oberflächenbereich 13 oder in umgekehrter Reihenfolge abgetastet wird. Dabei wird mit dem Laserstrahl eine konturengetreue Abbildung der Flächen-Vertiefung oder - Erhöhung sowie der vorgesehenen Auflageflächen beider Objekte (Schale 2, unterer oder oberer Gurt 4, 5) vorgenommen. Dem wird hinzugefügt, dass das Abtasten der Fügeflächen (der Schale 2 oder der betreffenden Gurte 4, 5) beispielgemäß sich auf das Scannen (das Abtasten) der Flächenarchitektur mit einem Lichtstrahl (einem Laserstrahl) bezieht, es aber ebenso denkbar wäre, andere (bekannte) lichtvermessende Verfahren, beispielsweise die Photogrammetrie oder das (bekannte) Lichtschnittverfahren (mittels Lichtlinienprojektion), mit denen die Auflageflächen der Fügepartner optisch vermessen werden, zu verwenden, worauf nicht näher eingegangen wird.

Natürlich kann man anstelle des Füllgutes nach dem Vorbild der Fig. 7 auch entsprechende Füllstücke 14a verwenden, deren Anzahl und Geometrie auf Basis des ermittelten Füllgut-Volumens durch die Kontrolleinheit 12 bestimmt wird. Dabei werden die Füllstücke 14a von einem als Füllmasseneinrichtung 15 eingesetzten Ultraschallcutter, mit dem das letzteren bereitgestellte Füllgut 14, beispielsweise kunststoffartiges Material, verarbeitet wird, bereitgestellt. Die Verarbeitung des Füllgutes 14 wird durch einen Ultraschallmesser, welcher dem Ultraschallcutter integriert ist, erledigt, welcher das ihm zugeführte Füllgut 14 zuschneiden und / oder geometrisch formen wird.

Dieser Zuschnitt ist (anschließend) mit einem handelsüblichen Werbeaufkleber vergleichbar. Außerdem besteht die Möglichkeit, dass einer als Dosiereinrichtung verwendeten Füllmasseneinrichtung 15 ein pulverartiges oder pastöses Füllgut 14 bereitgestellt wird, mit welchem der spaltige Abstand s dosiert und somit ausgeglichen wird. Die zurecht geschnittenen Füllstücke 14a oder das dosierte Füllgut 14 werden nach einer vorgesehenen Transporttechnologie dem Ort der Auffüllung des Füllschlitzes 1 mit Füllmaterial 14 oder Füllstücken 14a zugeführt.

Auch wird vorgeschlagen, dass das (allgemein bezeichnete) Füllgut 14 und / oder die verwendeten Füllstücke 14a aus einem kraftübertragenden kunststoffartigen Material, vorzugsweise aus GFK, CFK oder einem artähnlichen Material, bestehen, wobei eine zusätzliche Vernetzung der Füllstücke 14a (aus Haftgründen) mit einem Harzfilm denkbar wäre.

Auch besteht die Möglichkeit, dass das Füllgut 14 oder die Füllstücke 14a entweder handverlesen oder durch die Füllmasseneinrichtung 15 der Vertiefung des ausgewählten Oberflächenbereiches 13 [nach der Fig. 4] oder nebengelegen der Erhöhung (en) dieses Oberflächenbereiches 13 (und der Gurtauflagefläche 4, 5) [nach der Fig. 4a] direkt aufgefüllt und / oder angehäuft wird. Es kann auch sein, das die Auffüllung oder die Anhäufung nach einer geeigneten Transporttechnologie durch eine Fernbeschickung geschehen wird. Ausschließen wird man auch die Beschickung und den Ausgleich der Füllschlitze 1, 11, 12 (des spaltigen Abstandes s) mit einer Kombination von pulverartigen oder pastösen Füllmaterial 14 mittels der als Dosiereinrichtung verwendeten Füllmasseneinrichtung 15 nicht, sofern diese Art von Füllmaterial 14 dem darauffolgenden Fügen der dickwandigen Fügepartner zweckdienlich erscheint.

Die Gurtauflagefläche 8 sollte vorteilhafterweise auf dem ausgewählten Oberflächenbereich 13 der Schalenfläche 9 dermaßen positioniert werden, dass das Füllgut 14 oder die Füllstücke 14a den spaltigen Abstand s des ersten Füllspaltes 1 zwischen den Auflageflächen beider Objekte (Schale 2, unterer oder oberer Gurt 4, 5) vollständig ausfüllen und gleichermaßen diesem Fügespalt 1 vollkommen eingeschlossen werden. Anderenfalls könnte der (durch Erhöhungen der Gurtauflagefläche 8) geteilte ausgewählte Oberflächenbereich 13 von außerhalb der Fügepartner vor und hinter [also: nebengelegen der Erhöhungen) entlang der gestreckten Auflagefläche(n) der Objekte] mit dem Füllgut 14 oder den Füllstücken 14a unterfüttert werden.

Abschließend lässt sich zusammenfassen, dass die bekannten Verfahren sich nur auf das Fügen von dünnen Stringern auf dünnwandigen Hautfeldern konzentrieren. Über das Fügen von dicken Stringer-Querschnitten auf dickwandigen Hautfeldern mit den eingangs der Beschreibung angegebenen Nachteilen sind gegenwärtig keine Lösungen bekannt. Die vorgestellte Technologie ermöglicht aufgrund der beispielhaft eingesetzten Lichtapplikation (mit einem beispielsweise benutzen Laserstrahl) und der verfahrensmäßig einbezogenen elektronischer Datenaufbereitung und -verarbeitung einen tolerierbaren Umgang mit Einzelteil-Toleranzen dick(wandig)er Stringer 3 und Schalen 2 (Hautfelder) aus allgemein einem Kunststoff oder einem Metall.

Die beiden dick(wandig)en Fügepartner werden aus einem kunststoffartigen und im besonderen aus einem kohlefaserverstärkten Kunststoff-Werkstoff bestehen, wobei der Stringer 3 oder die Schale 2 (das zu versteifende Hautfeld) durchaus auch aus einem Leichtmetall, beispielsweise aus einem Aluminium oder aus Aluminium-Legierungen, bestehen können. Die kohlefaserverstärkten Werkstoffe werden sich auf ein CFK- oder GFK- oder artähnlichen Werkstoff beziehen. Die vorgesehenen Fügeflächen an der Schale 2 und am (Gurt 4, 5 des) Stringer(s) 3 werden vollautomatisch auf vorhandene geometrische Abweichungen von einer Ebenmäßigkeit untersucht. Die ermittelte Geometrie dieser Fügeflächen korreliert mit dem Ausgleich dieser Abweichungen, die sich allgemein durch die Feststellung von verschiedenartigen Schlitzmustern mit einer unterschiedlichen schlitzartigen Vertiefung oder von verschiedenartigen (ggf. gewellten) Bergmustern mit geometrisch von einer Ebenmäßigkeit abweichenden) erhobenen Auflagefläche(n) der Objekte äußert.

Im besonderen wird man in der Praxis bei den zur Fügung vorgesehenen Fügepartnern meistens (wenigstens) die Anordnung mit einem ersten oder (nur) einem zweiten und / oder (nur) einem dritten Fügeschlitz 1, 11, 12 antreffen, den die untersuchten Fügeflächen bei deren Auflage einander einschließen, wobei die festgestellten Abweichungen mit einem Füllmaterial (Füllgut 14, Füllstücken 14a) der angegeben Art ausgeglichen werden, um eben das anschließend beabsichtigte Fügen der beiden angegebenen Fügepartner problemlos zu realisieren. Dabei wird das benötigte Füllmaterial mit Unterstützung eines Ultraschallcutters oder einer Dosiereinrichtung vollautomatisch nach Menge, Volumen und Umfang bereitgestellt und zum Ausgleich der Fügespalte 1, 11, 12 eingesetzt. Der Füllmaterial-Ausgleich kann handverteilt oder transportbeschickt geschehen.

## Patentansprüche

1. **Verfahren zum Ausgleichen eines Fügespaltes (1),** den zwei aufeinander liegende Flächen von einer Schale (2) und einem Stringer (3) einschließen, bei dem eine Auflagefläche eines oberen oder unteren Gurtes (4, 5), die horizontal angeordnet werden und zusammen mit einem zu ihnen senkrecht stehenden Steg (6) den Stringer (3) bilden, auf einer Schalenfläche (9) der horizontal angeordneten Schale (2) positioniert wird, die durch Fügen miteinander verbunden werden, und bei dem durch eine Scannereinheit (7) bestehende geometrische Abweichungen von einer Ebenmäßigkeit einer Gurtauflagefläche (8) des oberen oder unteren Gurtes (4, 5) und der Schalenfläche (9) durch horizontale oder vertikale und punkt- oder zeilenweise Abtastung der Gurtauflagefläche (8) oder der Schalenfläche (9) mit einem Lichtstrahl (10) erfasst und darauf folgend elektronisch gewandelt werden, wobei das erfasste Scannerergebnis nach geschehener Wandlung über eine Signalleitung (11) an eine Kontrolleinheit (12) weitergeleitet wird, **gekennzeichnet durch folgende Schritte**, nach denen
a) zuerst ein ausgewählter Oberflächenbereich (13) der Schalenfläche (9), auf dem die betreffende Gurtauflagefläche (8) später positioniert wird, und danach die Oberfläche dieser Gurtauflagefläche (8) vollständig mit dem Lichtstrahl (10) abgetastet wird oder in einer umgekehrten Reihenfolge,
b) dann **durch** die Kontrolleinheit (12) der Fügespalt (1) für jeden abgetasteten spaltigen Abstand (s) zwischen dem ausgewählten Oberflächenbereich (13) der Schalenfläche (9) und der Gurtauflagefläche (8) des betreffenden Gurtes (4, 5) rechentechnisch ermittelt wird, wobei die Kontrolleinheit (12) den vertikalen spaltigen Abstand (s) zwischen den betreffenden Auflageflächen auf eine fiktiv definierte Abstandslinie (L) beziehen wird, die horizontal gelegen den ausgewählten Oberflächenbereich (13) der Schalenfläche (9) und die Gurtauflagefläche (8) überspannt und einem betreffenden horizontal gelegenen Berührungsbereich (BB, YY, ZZ), den die Auflageflächen beider aufeinander liegenden Objekte an der Stelle ihrer Berührung eingrenzen, tangential anliegt,
c) danach ein Füllgut (14), das zum Ausgleichen des Fügespaltes (1, 11, 12) benötigt wird, hinsichtlich dessen Menge, Geometrie und Volumen durch die Kontrolleinheit (12) rechentechnisch ermittelt wird, wobei das Ermittlungsergebnis über eine weitere Signalleitung (11) an eine Füllmasseneinrichtung (15) übermittelt wird,
d) darauffolgend das ermittelte Volumen des Füllgutes (14), das die Füllmasseneinrichtung (15) bereitstellen wird, in Korrelation von dessen Geometrie dem ausgewählten Oberflächenbereich (13) der Schalenfläche (9) aufgefüllt wird, sofern ein spaltiger Abstand (s) nach dem Schritt b ermittelt wird,
e) anschließend die Gurtauflagefläche (8) auf dem ausgewählten Oberflächenbereich (13) der Schalenfläche (9) positioniert wird, wodurch der spaltige Abstand (s) zwischen oder neben den Auflageflächen mit dem Füllgut (14) ausgeglichen wird.

2. **Verfahren** nach Anspruch 1, **dadurch gekennzeichnet, daß** der Schritt b) mit einer der Kontrolleinheit (12) informationstechnisch verbundenen Computereinheit (16) realisiert wird, mit der im Rahmen einer Computersimulation zunächst ein erster vertikaler Abstand (c) ermittelt wird, der zwischen einer simulierten zweiten Abstandslinie (A) und einem ersten lotrecht der zweiten Abstandslinie (A) beabstandet gelegenen Tiefpunkt (e) der flächenbezogenen geometrischen Abweichung des Oberflächenbereiches (13) der Schalenfläche (9) liegt, und danach ein zweiter vertikaler Abstand (d) ermittelt wird, der zwischen einer simulierten dritten Abstandslinie (B) und einem zweiten lotrecht der dritten Abstandslinie (B) beabstandet gelegenen Tiefpunkt (f) der flächenbezogenen geometrischen Abweichung der Gurtauflagefläche (8) liegt, wobei die beiden simulierten Abstandslinien (A, B) einer horizontal gelegenen Linie entsprechen werden, welche jeweils die Breite des ausgewählten Oberflächenbereiches (13) und der Gurtauflagefläche (8) überspannen werden und breitenseitlich eines ersten Fügespaltes (1) den geometrisch nicht von einer Ebenmäßigkeit abweichenden Auflageflächen der Objekte tangential anliegen werden, und darauffolgend die Addition dieser vertikalen Abstände (c, d) für jeden abgescannten Flächenbereich rechentechnisch ermittelt werden.

3. **Verfahren** nach Anspruch 1, **dadurch gekennzeichnet, daß** der Schritt b) mit einer der Kontrolleinheit (12) informationstechnisch verbundenen Computereinheit (16) realisiert wird, mit der im Rahmen einer Computersimulation zunächst ein dritter vertikaler Abstand (g) ermittelt wird, der zwischen einem ersten Hochpunkt (i) der flächenbezogenen geometrischen Abweichung des Oberflächenbereiches (13) der Schalenfläche (9), der auf einer simulierten vierten Abstandslinie (C) liegt, und einem lotrecht der vierten Abstandslinie (C) beabstandet gelegenen ersten Ebenenpunkt (k) des Oberflächenbereiches (13) der Schalenfläche (9) liegt, und danach ein vierter vertikaler Abstand (h) ermittelt wird, der zwischen einem zweiten Hochpunkt (j) der flächenbezogenen geometrischen Abweichung der Gurtauflagefläche (8) liegt, der auf einer simulierten fünften Abstandslinie (D) liegt und einem lotrecht der fünften Abstandslinie (D) beabstandet gelegenen zweiten Ebenenpunkt (1) der Gurtauflagefläche (8) liegt, wobei die beiden simulierten Abstandslinien (C, D) einer horizontal gelegenen Linie entsprechen werden, welche jeweils die Breite des ausgewählten Oberflächenbereiches (13) und der Gurtauflagefläche (8) überspannen werden und den geometrisch von einer Ebenmäßigkeit abweichenden erhobenen Auflageflächen der Objekte, denen nebengelegen jeweils ein zweiter und dritter Fügespalt (11, 12) angrenzen wird, tangential anliegen werden, und darauffolgend die Addition dieser vertikalen Abstände (g, h) für jeden abgescannten Flächenbereich rechentechnisch ermittelt werden.

4. **Verfahren** nach Anspruch 2, **dadurch gekennzeichnet, daß** entweder der erste oder der zweite vertikale Abstand (c, d) ermittelt wird, wobei die Ermittlung von einem dieser beiden Abstände (c, d) entfallen wird, da entweder der Oberflächenbereich (13) der Schalenfläche (9) oder die Gurtauflagefläche (8) des betreffenden Gurtes (4, 5) geometrisch nicht von einer Ebenmäßigkeit abweichen wird.

5. **Verfahren** nach Anspruch 3, **dadurch gekennzeichnet, daß** entweder der dritte oder der vierte vertikale Abstand (g, h) ermittelt wird, wobei die Ermittlung von einem dieser beiden Abstände (g, h) entfallen wird, da entweder der Oberflächenbereich (13) der Schalenfläche (9) oder die Gurtauflagefläche (8) des betreffenden Gurtes (4, 5) geometrisch nicht von einer Ebenmäßigkeit abweichen wird.

6. **Verfahren** nach den Ansprüchen 4 und 5, **dadurch gekennzeichnet, daß** ein sich mit dem dritten vertikalen Abstand (g) erhebender Objektteil der Schale (2) oder ein sich mit dem vierten vertikalen Abstand (h) erhebender Objektteil des betreffenden Gurtes (4, 5) dem ersten Fügespalt (1), der mit einer flächenweise vorhandenen Vertiefung des ausgewählten Oberflächenbereiches (13) der Schalenfläche (9) oder der Gurtauflagefläche (8) des betreffenden Gurtes (4, 5) vorhanden ist, fixiert wird, unter der Voraussetzung, dass der betreffende erhebende Objektteil mit dem ersten Fügespalt (1) korrespondieren wird.

7. **Verfahren** nach den Ansprüchen 2 bis 6, **dadurch gekennzeichnet, daß** der spaltige Abstand (s) des ersten Fügespaltes (1) durch eine Addition des ersten vertikalen Abstandes (c) und des vertikalen Abstandes (d) oder derjenige des zweiten und des dritten Fügespaltes (11, 12) durch die Addition des dritten vertikalen Abstandes (g) und des vierten vertikalen Abstandes (h) für jede abgetastete Abweichung ermittelt wird, wobei der spaltige Abstand (s) im Ausnahmefall nur durch den ersten oder zweiten und durch den dritten oder vierten vertikalen Abstand (c, d) für jede abgetastete Abweichung ermittelt wird.

8. **Verfahren** nach Anspruch 1, **dadurch gekennzeichnet, daß** mit dem Lichtstrahl (10) ein rechteckförmiger Oberflächenbereich (13) auf der Schalenfläche (9) abgetastet wird, wobei die Maßhaltigkeit des Oberflächenbereiches (13) und der Gurtauflagefläche (8) hinsichtlich der Breiten- und Längenmaße der Objekte aufeinander abgestimmt werden.

9. **Verfahren** nach Anspruch 1, **dadurch gekennzeichnet, daß** als Füllgut (14) Füllstücke (14a) verwendet werden, deren Anzahl und Geometrie auf Basis des ermittelten Füllgut-Volumens durch die Kontrolleinheit (12) bestimmt wird.

10. **Verfahren** nach den Ansprüchen 1 und 9, **dadurch gekennzeichnet, daß** ein Ultraschallcutter als Füllmasseneinrichtung (15) verwendet wird, der das bereitgestellte Füllgut (14) zu Füllstücke (14a) verarbeiten wird.

11. **Verfahren** nach Anspruch 10, **dadurch gekennzeichnet, daß** mit einem dem Ultraschallcutter integrierten Ultraschallmesser aus dem bereitgestellten Füllgut (14) die Füllstücke (14a) zugeschnitten und / oder geometrisch geformt werden.

12. **Verfahren** nach den Ansprüchen 1 und 9, **dadurch gekennzeichnet, daß** einer als Dosiereinrichtung verwendeten Füllmasseneinrichtung (15) ein pulverförmiges oder pastöses Füllgut (14) bereitgestellt wird, das nach Schritt e von ihr dem spaltigen Abstand (s) dosiert wird, mit dem der spaltige Abstand (s) ausgeglichen wird.

13. **Verfahren** nach Anspruch 1, **dadurch gekennzeichnet, daß** die geometrischen Abweichungen von einer Ebenmäßigkeit der Schalen- oder Gurtauflagefläche (8, 9) auf eine konturenbezogene Vertiefung oder Erhöhung der Flächen bezogen wird.

14. **Verfahren** nach den Ansprüchen 1 und 13, **dadurch gekennzeichnet, daß** das Füllgut (14) entweder handverlesen oder durch die Füllmasseneinrichtung (15) der Vertiefung des Oberflächenbereiches (13) aufgefüllt und angehäuft wird.

15. **Verfahren** nach Anspruch 1, **dadurch gekennzeichnet, daß** dicke und starre Stringer (3) aus einem Kunststoff oder einem Metall sowie dickwandige und starre Schalen (2) aus einem Kunststoff oder einem Metall, die sich auf ein zu versteifendes Hautfeld beziehen und auf denen die Gurtauflagefläche (8) des Stringers (3) positioniert wird, verwendet werden.

16. **Verfahren** nach Anspruch 15, **dadurch gekennzeichnet, daß** ein kohlenfaserverstärkter Kunststoff-Werkstoff, vorzugsweise ein CFK- oder GFK- oder artähnlicher Werkstoff und anstelle des Metalls ein Leichtmetall-Werkstoff, vorzugsweise ein Aluminium-Werkstoff, verwendet wird.

17. **Verfahren** nach Anspruch 11, **dadurch gekennzeichnet, daß** das Füllgut (14) mit mehreren Füllstücken (14a), die aus einem kraftübertragenden Werkstoff, vorzugsweise aus GFK oder CFK, bestehen und zusätzlich mit einem Harzfilm versetzt werden, realisiert wird.

18. **Verfahren** nach den Ansprüchen 1, 3 und 9, **dadurch gekennzeichnet, daß** nach dem Schritt e) die Gurtauflagefläche (8) auf dem ausgewählten Oberflächenbereich (13) der Schalenfläche (9) dermaßen positioniert wird, dass das Füllgut (14) oder die Füllstücke (14a) den spaltigen Abstand (s) zwischen oder neben den Auflageflächen beider Objekte vollständig ausfüllen und gleichermaßen dem betroffenen Fügespalt (1, 11, 12) vollkommen eingeschlossen werden.

19. **Verfahren** nach Anspruch 1, **dadurch gekennzeichnet, daß** der Lichtstrahl (10) von einer der Scannereinheit (7) integrierten Laserquelle bereitgestellt wird, mit dem die Gurtauflagefläche (8) und danach der ausgewählte Oberflächenbereich (13) oder in umgekehrter Reihenfolge abgetastet wird.

## Claims

1. A method of filling a joining gap (1) between two superposed faces of a shell (2) and a stringer (3), in which a support face of an upper or lower flange (4, 5) which are arranged horizontally and, together with a web (6) perpendicular thereto, form the stringer (3), is positioned on a shell face (9) of the horizontally arranged shell (2), and these are connected to one another by being joined, and in which existing geometrical deviations from planarity of a flange support face (8) of the upper or lower flange (4, 5) and the shell face (9) are detected by a scanner unit (7) by horizontal or vertical scanning over points or lines of the flange support face (8) or the shell face (9) using a light beam (10) and are thereafter converted electronically, with the detected scanning result being passed on, after the conversion, via a signal line (11) to a monitoring unit (12),
**characterised by** the following steps, in accordance with which
a) first a selected surface region (13) of the shell face (9) on which the relevant flange support face (8) is later positioned and then the surface of this flange support face (8) are completely scanned using the light beam (10), or this happens in the reverse order,
b) then the monitoring unit (12) determines by computer technology the joining gap (1) for each scanned gap spacing (s) between the selected surface region (13) of the shell face (9) and the flange support face (8) of the relevant flange (4, 5), with the monitoring unit (12) applying the vertical gap spacing (s) between the relevant support faces to a notionally defined spacing line (L) which horizontally spans the selected surface region (13) of the shell face (9) and the flange support face (8) and lies tangentially with respect to a relevant horizontal contact region (BB, YY, ZZ) delimited by the support faces of both superposed objects at the point at which they are in contact,
c) thereafter a filling material (14) which is needed to fill the joining gap (1, 11, 12) is determined by computer technology by the monitoring unit (12) as regards its quantity, geometry and volume, with the result of determination being transmitted via a further signal line (11) to a filling material device (15),
d) thereupon the determined volume of the filling material (14) which the filling material device (15) will supply is applied in accordance with its geometry to the selected surface region (13) of the shell face (9) if a gap spacing (s) has been determined in accordance with step b,
e) subsequently the flange support face (8) is positioned on the selected surface region (13) of the shell face (9), as a result of which the gap spacing (s) between or next to the support faces is filled with the filling material (14).

2. A method according to Claim 1, **characterised in that** step b) is carried out using a computer unit (16) which is connected to the monitoring unit (12) by computer engineering means and is used as part of a computer simulation first to determine a first vertical spacing (c) which lies between a simulated second spacing line (A) and a first low point (e), spaced vertically from the second spacing line (A), of the geometrical deviation from the face of the surface region (13) of the shell face (9), and then to determine a second vertical spacing (d) which lies between a simulated third spacing line (B) and a second low point (f), spaced vertically from the third spacing line (B), of the geometrical deviation from the face of the flange support face (8), with the two simulated spacing lines (A, B) each corresponding to a horizontal line, which span the widths of the selected surface region (13) and the flange support face (8) respectively and, in the width direction as regards a first joining gap (1), lie tangentially with respect to the support faces of the objects not deviating geometrically from planarity, and thereupon these vertical spacings (c, d) are added together, determined by computer technology, for each scanned face region.

3. A method according to Claim 1, **characterised in that** step b) is carried out using a computer unit (16) which is connected to the monitoring unit (12) by computer engineering means and is used as part of a computer simulation first to determine a third vertical spacing (g) which lies between a first high point (i) of the geometrical deviation from the face of the surface region (13) of the shell face (9), which lies on a simulated fourth spacing line (C), and a first plane point (k) of the surface region (13) of the shell face (9) which is spaced vertically from the fourth spacing line (C), and then to determine a fourth vertical spacing (h) which lies between a second high point (j) of the geometrical deviation from the face of the flange support face (8), which lies on a simulated fifth spacing line (D), and a second plane point (1) of the flange support face (8) which lies spaced vertically from the fifth spacing line (D), with the two simulated spacing lines (C, D) each corresponding to a horizontal line, which span the widths of the selected surface region (13) and the flange support face (8) respectively and lie tangentially with respect to the raised support faces of the objects deviating geometrically from planarity, which are adjoined by a respective second and third joining gap (11, 12) alongside them, and thereupon these vertical spacings (g, h) are added together, determined by computer technology, for each scanned face region.

4. A method according to Claim 2, **characterised in that** either the first or the second vertical spacing (c, d) is determined, with the determination of one of these two spacings (c, d) being dispensed with since either the surface region (13) of the shell face (9) or the flange support face (8) of the relevant flange (4, 5) will not deviate geometrically from planarity.

5. A method according to Claim 3, **characterised in that** either the third or the fourth vertical spacing (g, h) is determined, with the determination of one of these two spacings (g, h) being dispensed with since either the surface region (13) of the shell face (9) or the flange support face (8) of the relevant flange (4, 5) will not deviate geometrically from planarity.

6. A method according to Claims 4 and 5, **characterised in that** an object part of the shell (2) which is raised by the amount of the third vertical spacing (g) or an object part of the relevant flange (4, 5) which is raised by the amount of the fourth vertical spacing (h) is fixed to the first joining gap (1), which takes the form of a depression present in some areas of the selected surface region (13) of the shell face (9) or the flange support face (8) of the relevant flange (4, 5), with the proviso that the relevant raised object part corresponds to the first joining gap (1).

7. A method according to Claims 2 to 6, **characterised in that** the gap spacing (s) of the first joining gap (1) is determined by adding the first vertical spacing (c) and the vertical spacing (d), or that of the second and third joining gap (11, 12) is determined by adding the third vertical spacing (g) and the fourth vertical spacing (h), for each deviation scanned, with the gap spacing (s) being determined in exceptional cases only by the first or second and the third or fourth vertical spacings (c, d) for each deviation scanned.

8. A method according to Claim 1, **characterised in that** a rectangular surface region (13) on the shell face (9) is scanned using the light beam (10), with the dimensional accuracy of the surface region (13) and the flange support face (8) being matched to one another in respect of the width and length dimensions of the objects.

9. A method according to Claim 1, **characterised in that** there are used as filling material (14) filling pieces (14a) whereof the number and geometry is determined on the basis of the volume of filling material determined by the monitoring unit (12).

10. A method according to Claims 1 and 9, **characterised in that** an ultrasound cutter is used as the filling material device (15), and this will process the filling material (14) supplied to produce filling pieces (14a).

11. A method according to Claim 10, **characterised in that** the filling pieces (14a) are cut to size and/or geometrically shaped from the filling material (14) supplied using an ultrasound blade integrated in the ultrasound cutter.

12. A method according to Claims 1 and 9, **characterised in that** a powder or paste filling material (14) is supplied to a filling material device (15) used as a metering device, and after step e the filling material (14) is metered therefrom to the gap spacing (s) and is used to fill the gap spacing (s).

13. A method according to Claim 1, **characterised in that** the geometric deviations from planarity in the shell or flange support faces (8, 9) are applied to a depression or raised area in the contour of the faces.

14. A method according to Claims 1 and 13, **characterised in that** the filling material (14) is filled and piled up in the depression in the surface region (13), either sorted by hand or carried out by the filling material device (15).

15. A method according to Claim 1, **characterised in that** thick and thin stringers (3) made from a synthetic material or a metal and thick-walled and solid shells (2) made from a synthetic material or a metal, which are used to cover a skin panel to be reinforced and on which the flange support face (8) of the stringer (3) is positioned, are used.

16. A method according to Claim 15, **characterised in that** a carbon-fibre reinforced synthetic material, preferably a CRP or GRP or similar type of material, is used and instead of the metal a lightweight metal material, preferably an aluminium material, is used.

17. A method according to Claim 11, **characterised in that** the filling material (14) is made in the form of a plurality of filling pieces (14a) which are made from a force-transmitting material, preferably GRP or CRP, and additionally have a resin film applied to them.

18. A method according to Claims 1, 3 and 9, **characterised in that** after step e) the flange support face (8) is positioned on the selected surface region (13) of the shell face (9) such that the filling material (14) or the filling pieces (14a) completely fill the gap spacing (s) between or next to the support faces of both objects and in a similar manner completely fill up the relevant joining gap (1, 11, 12).

19. A method according to Claim 1, **characterised in that** the light beam (10) is supplied from a laser source which is integrated in the scanner unit (7) and which is used to scan the flange support face (8) and thereafter the selected surface region (13), or this happens in the reverse order.

## Revendications

1. Procédé pour compenser un jeu (1), que délimitent les deux surfaces superposées d'une coque (2) et d'un raidisseur (3), dans lequel une surface d'appui d'une semelle supérieure ou inférieure (4, 5), disposée horizontalement et une traverse verticale (6) perpendiculaire à celles-ci forment ensemble le raidisseur (3), est positionnée sur une surface en forme de coque (9) de la coque disposée horizontalement (2), ces deux surfaces étant en contact par l'intermédiaire de fentes et dans lequel les écarts résiduels de planéité géométrique entre une surface d'appui (8) de la semelle supérieure ou inférieure (4, 5) et la surface en forme de coque (9) sont détectés au moyen d'un scanner (7), par balayage horizontal ou vertical par rayon lumineux (10) ponctuel ou par lignes, de la surface d'appui de la semelle (8) ou de la surface en forme de coque (9), puis convertis électroniquement, et les résultats donnés par le scanner après conversion à travers un circuit d'acheminement (11), sont ensuite transférés à une unité de contrôle (12),
**caractérisé par** les étapes suivantes dans lesquelles,
a) en premier lieu, une zone superficielle choisie (13) de la surface en forme de coque (9) sur laquelle sera appliquée ultérieurement la surface d'appui de la semelle (8) correspondante, puis la surface de la surface d'appui de cette semelle (8) seront balayées entièrement par le rayon lumineux (10) ou suivant un ordre inverse.
b) Ensuite le jeu (1) est saisi par l'unité de contrôle (12) au moyen d'une technique de calcul, pour chacun des écarts (s) balayés le long du jeu entre la zone choisie (13) de la surface en forme de coque (9) et la surface d'appui (8) de la semelle (4, 5), l'unité de contrôle (12) prenant en compte l'écart vertical en forme de fente (s) entre les surfaces en contact, sur une ligne d'écart fictif (L), qui s'étend horizontalement, et sur laquelle se superposent la zone superficielle (13) de la surface en forme de coque (9) et la surface d'appui de la semelle (8) qui s'applique tangentiellement, et sur une zone de contact disposée horizontalement (BB, YY, ZZ), qui délimite les surfaces d'appui des deux objets superposés à l'emplacement de leur zone de contact
c) ensuite, l'importance, la géométrie et le volume du matériau de remplissage (14) destiné à compenser le jeu (1 , 11, 12), sont définis par l'unité de contrôle (12), au moyen d'une technique de calcul, les résultats correspondants étant transmis à travers un autre circuit d'acheminement (11), à un dispositif de remplissage (15),
d) ensuite, le volume de remplissage défini (14) préparé par le dispositif de remplissage (15), est introduit, conformément à sa géométrie, dans la zone superficielle choisie (13) de la surface en forme de coque (9), dans la mesure où un écart en forme de fente (s) aura été détecté, conformément à l'étape b.
e) ensuite la surface d'appui de la semelle (8) est mise en place sur la zone superficielle choisie (13) de la surface en forme de coque (9) et de cette façon, sera compensé l'écart vertical en forme de fente (s) entre ou au voisinage de la surface d'appui.

2. Procédé suivant la revendication 1, **caractérisé en ce que** l'étape b) est réalisée par ordinateur (16) relié par informatique à une unité de contrôle (12), au moyen de laquelle est saisi, dans le cadre d'une simulation par ordinateur, un premier écart vertical (c), entre une deuxième ligne d'écart fictive (A) et un premier point bas (e) situé, à une certaine distance, sur une ligne perpendiculaire à la deuxième ligne d'écart (A) sur l'évidement géométrique par rapport à la zone superficielle (13) de la surface en forme de coque (9) et un deuxième écart vertical (d) entre une troisième ligne d'écart fictive (B) et un deuxième point bas (f) situé sur une ligne perpendiculaire à la troisième ligne d'écart (B) sur l'évidement géométrique par rapport à la surface d'appui de la semelle (8), les deux lignes fictives d'écart (A, B) correspondant à une ligne horizontale que recouvriront respectivement la largeur de la zone superficielle choisie (13) et celle de la surface d'appui de la semelle (8), et du côté de la largeur d'un premier jeu (1) viendront s'appliquer tangentiellement les surfaces d'appui des objets qui ne s'écartent pas d'une planéité géométrique et de plus, l'addition de ces écarts verticaux (c, d) sera obtenu par le calcul pour chacune des zones superficielles scannées.

3. Procédé suivant la revendication 1, **caractérisé en ce que**, l'étape b) est réalisée par ordinateur (16) relié par informatique à une unité de contrôle (12), au moyen de laquelle, dans le cadre d'une simulation par ordinateur, est saisi un troisième écart vertical (g) situé entre un premier point haut (i) de la projection de l'évidement géométrique sur le plan de la zone superficielle (13) de la surface en forme de coque (9), situé sur une quatrième ligne d'écart fictive (C) et un premier point (k) de la zone superficielle (13) de la surface en forme de coque (9), situé à une certaine distance sur une perpendiculaire à la quatrième ligne d'écart fictive (C), puis un quatrième écart vertical (h) entre un deuxième point haut (j) de la projection de l'évidement géométrique sur le plan de la surface d'appui de la semelle (8), situé sur une cinquième ligne d'écart fictive (D) et un deuxième point (i) de la surface d'appui de la semelle (8) situé à distance sur une perpendiculaire à la cinquième ligne d'écart fictive (D), les deux lignes d'écart fictives (C, D)) forment une ligne horizontale que recouvriront respectivement la largeur de la zone superficielle choisie (13) et celle de la surface d'appui de la semelle (8) et viennent s'appliquer tangentiellement sur les surfaces d'appui *relevées* des objets, ne s'écartant pas géométriquement de la planéité, au voisinage desquels viendront aboutir respectivement un deuxième et un troisième jeu (11, 12) et ensuite, l'addition de ces écarts verticaux (g, h) sera obtenue par le calcul, pour chacune des zones surface scannées.

4. Procédé suivant la revendication 2, **caractérisé en ce que** l'on saisit ou bien le premier ou bien le deuxième écart vertical (c, d), la saisie de l'un de ces deux écarts (c, d) devenant inutile, du fait que, ou bien la zone superficielle (13) de la surface d'enveloppe (9) ou bien la surface d'appui (8) de la semelle (4, 5) correspondante ne peut s'écarter géométriquement de sa planéité.

5. Procédé suivant la revendication 3, **caractérisé en ce que** l'on saisit ou bien le troisième ou bien le quatrième écart vertical (g, h), la saisie de l'un de ces deux écarts (g, h) devenant inutile, du fait que, ou bien la zone superficielle (13) de la surface d'enveloppe (9) ou bien la surface d'appui (8) de la semelle (4, 5) correspondante ne peut s'écarter géométriquement de sa planéité

6. Procédé suivant les revendications 4 et 5, **caractérisé en ce qu'**une partie relevée de l'objet de la coque (2) avec le troisième écart vertical (g), ou une partie relevée de l'objet de la semelle correspondante (4, 5) avec le quatrième écart vertical (h), est fixé au contact du premier jeu (1), qui est constitué par un creux dans la zone superficielle choisie (13) de la surface en forme de coque (9), ou de la surface d'appui (8) de la semelle correspondante (4, 5), en admettant que la partie relevée de l'objet correspondra au premier jeu (1).

7. Procédé suivant les revendications 2 à 6, **caractérisé en ce que** l'écart en forme de fente (s) du premier jeu (1) sera saisi, pour chaque évidement balayé, comme l'addition du premier écart vertical (c) et de l'écart vertical (d) ou de l'un ou l'autre des deuxième et troisième écart (11. 12), comme l'addition du troisième écart vertical (g) et du quatrième écart vertical (h), l'écart en forme de fente (s) pouvant n' être saisi exceptionnellement pour chaque évidement balayé que par le premier ou le deuxième ou par le troisième ou le quatrième écart vertical (c, d).

8. Procédé suivant la revendication 1, **caractérisé en ce que**, le rayon lumineux (10) permet de balayer une zone superficielle rectangulaire (10) sur la surface en forme de coque (9), le respect des dimensions des objets, en longueur et en largeur, de la zone superficielle (13) par rapport à la surface d'appui de la semelle (8), l'une sur l'autre étant assurée.

9. Procédé suivant la revendication 1, **caractérisé en ce que**, comme matériau de compensation (14), on utilise des éléments de remplissage (14a) dont le nombre et la géométrie sont déterminés par l'unité de contrôle (12) sur la base du volume des matériaux de compensation.

10. Procédé suivant les revendications 1 à 9, **caractérisé en ce que** l'on utilise, comme dispositif de remplissage (15), un cutter à ultrasons qui permet de transformer le matériau de remplissage (14) en éléments de remplissage (14a).

11. Procédé suivant la revendication 10, **caractérisé en ce qu'**un couteau à ultrasons intégré dans le cutter à ultrasons permet de découper et / ou de changer la forme géométrique du matériau de remplissage.

12. Procédé suivant les revendication 1 et 9, **caractérisé en ce qu'**un dispositif de remplissage (15) utilisé comme dispositif de dosage permet de préparer un matériau de remplissage (14) pulvérulent ou pâteux, qui, d'après l'étape e) sera dosé et compensé au niveau de l'écart en forme de fente (s).

13. Procédé suivant la revendication 1, **caractérisé en ce que** les évidements géométriques de planéité dans la surface de la coque ou de la semelle (8, 9) seront garnis par un creusement ou un rehaussement des surfaces respectives.

14. Procédé suivant les revendications 1 et 13, **caractérisé en ce que** le matériau de remplissage (14) dans l'évidement de la zone superficielle (13), est rempli et entassé ou bien à la main ou bien au moyen du dispositif de remplissage (15).

15. Procédé suivant la revendication 1, **caractérisé en ce que** l'on utilise des raidisseurs rigides (3) en plastique ou en métal, ainsi que des coques à parois épaisses et rigides (2) en plastique ou en métal se rapportant à une *zone superficielle* à rigidifier et sur lesquels sera mise en place la surface d'appui de la semelle (8) du raidisseur (3).

16. Procédé suivant la revendication 15, **caractérisé en ce que** l'on utilise un raidisseur en matières plastiques renforcées par des fibres de carbone, de préférence un matériau CFK ou GFK ou de même nature, et en remplacement du métal, un matériau à base de métal léger, de préférence un matériau à base d'aluminium.

17. Procédé suivant la revendication 11, **caractérisé en ce que** le matériau de remplissage (14) est réalisé sous forme de nombreux éléments de remplissage (14a) qui sont constitués d'un matériau supportant des charges, de préférence en GFK ou CFK et qui sont de plus, *déplacés* par un film de résine.

18. Procédé suivant les revendications 1, 3 et 9, **caractérisé en ce que** d'après l'étape e) la surface d'appui de la semelle (8) est disposée sur la zone superficielle (13) de la surface en forme de coque (9) de telle sorte que le matériau de remplissage (14), ou les éléments de remplissage (14a) remplissent complètement l'écart en forme de fente (s) entre, ou au voisinage des faces d'appui des deux objets, et englobent de la même manière le joint concerné (1, 11, 12).

19. Procédé suivant la revendication 1, **caractérisé en ce que** le rayon lumineux (10) de l'une des sources de laser intégrées au scanner (7) est préparé pour balayer la surface d'appui de la semelle (8) puis la zone superficielle sélectionnée (13) ou suivant une séquence inverse.
